# EUROPÄISCHE PATENTANMELDUNG

(11) **EP 2 484 868 A2**
(43) Veröffentlichungstag der Anmeldung: **08.08.2012**
(21) Anmeldenummer: 12151014.3
(22) Anmeldetag: 13.01.2012
(51) Int. Cl.: F01D 5/10, F01D 5/26, F01D 5/30, F01D 25/06, F04D 29/66

(54) **Dämpfungsring**

(30) Priorität: 04.02.2011 DE 102011010327
(71) Anmelder: MTU Aero Engines GmbH, 80995 München (DE)
(72) Erfinder: Schütte, Wilfried, 82041 Oberhaching-Furth (DE); Schmidt, Franz-Dieter, 82544 Egling (DE); Rabe, Johannes, 85221 Dachau (DE)

(57) **Zusammenfassung**

Offenbart ist ein Ringelement 1 für eine Turbomaschine, insbesondere für eine Fluggasturbine, mit einem Ringelementgrundkörper 14, der zwei benachbart angeordnete Ringenden 16, 18 aufweist, wobei die Ringenden 16, 18 formschlüssig bezüglich einer Axialebene 26 miteinander verbunden sind. Weiterhin offenbart ist eine Turbomaschine mit zumindest einem derartigen Ringelement 1.

## Beschreibung

Die Erfindung betrifft ein Ringelement gemäß dem Oberbegriff des Patentanspruchs 1 und eine Turbomaschine gemäß Anspruch 11 mit einem derartigen Ringelement.

Eine Schwingungsdämpfung mittels Ringelementen kann insbesondere zur Dämpfung und Einschränkung des Schaufelkippens von Turbinenschaufeln im Verdichterbereich einer Gasturbine, wie beispielsweise einer Fluggasturbine vorgesehen sein. Derartige Ringelemente, wie beispielsweise Dämpfungsringe bzw. Dämpfungsdrähte, sogenannte Damper Wires, sind häufig in einer Nut des Bauteils aufgenommen, die beispielsweise in einem Rotor eines Verdichters ausgebildet ist. Ringelemente weisen zwei benachbart angeordnete Ringenden auf, die relativ zueinander und relativ zu ihrer Umgebung in der Ringnut beweglich sind.

Nachteilig bei derartigen Ringelementanordnungen ist, dass insbesondere aufgrund von Vibrationen der Ringenden an beiden Seitenflächen der zur Aufnahme der Ringelemente vorgesehenen Ringnut und an benachbarten Bauteilen, wie beispielsweise der Schaufelplattform einer Verdichterschaufel, Reibverschleiß (engl. Fretting) auftritt. Die Ringenden können sich ferner derart bewegen, dass sich diese in den Gasströmungspfad hinein erstrecken und die Strömungsverhältnisse negativ beeinflussen.

Demgegenüber liegt der Erfindung die Aufgabe zugrunde, ein Ringelement und eine Turbomaschine mit einem derartigen Ringelement zu schaffen, bei denen der Verschleiß von Bauteilen im Bereich der Ringenden des Ringelementes zumindest reduziert ist.

Diese Aufgabe wird mittels eines Ringelements mit den Merkmalen des Patentanspruchs 1 sowie durch eine Turbomaschine gemäß Anspruch 11 gelöst.

Das erfindungsgemäße Ringelement ist vorzugsweise zur Aufnahme in einer Ringnut, insbesondere einer Turbomaschine, wie beispielsweise einer Fluggasturbine, vorgesehen und weist einen Ringelementgrundkörper mit zwei benachbart angeordneten Ringenden auf. Erfindungsgemäß sind die Ringenden formschlüssig bezüglich einer Axialebene miteinander verbunden. Der Verschleiß und Beschädigungen des Bauteils, wie insbesondere einer Verdichtertrommel einer Fluggasturbine, sowie angrenzender Bauteile im Bereich der Ringenden, beispielsweise Schaufelplattformen von Verdichterschaufeln, sind aufgrund der definierten Führung der Enden zumindest stark minimiert. Die Betriebssicherheit ist dadurch erheblich verbessert und eine höhere Bauteillebensdauer wird erreicht. Aufgrund der geführten Ringenden kann das Ringelement in der Ringnut frei rotierend angeordnet sein. Eine Bewegung der Ringenden in den Gasströmungspfad ist durch die Verbindung der Endabschnitte verhindert. Ferner wird ein Verwinden der Ringenden mit den damit verbundenen Verschleißerscheinungen und Beschädigungen unterbunden. Erfindungsgemäße Ringelemente können als Dämpfungsringe zur Schwingungsdämpfung, insbesondere zur Dämpfung und Einschränkung des Schaufelkippens von Turbinenschaufeln im Verdichterbereich einer Gasturbine, wie beispielsweise einer Fluggasturbine vorgesehen sein. Vorteilhaft ist hierbei, dass das Dämpfungsverhalten auch im Bereich der Ringenden im Wesentlichen unverändert ist, da sich die Dämpfungsmasse im Verbindungsbereich der Ringenden lediglich minimal verändert. Zusätzlich oder alternativ können die Ringelemente bei in Axialnuten eingesetzten Schaufeln eine Haltefunktion erfüllen und zur Axialsicherung der Schaufeln dienen.

Gemäß einem besonders bevorzugten Ausführungsbeispiel der Erfindung weist ein erstes Ringende zwei Führungsschenkel zur etwa mittigen Aufnahme eines Führungsvorsprungs eines zweiten Ringendes auf. Die Ringenden sind dadurch gemäß dem Prinzip einer Nut-Feder-Verbindung bezüglich der Axialebene formschlüssig geführt. Vorzugsweise erstrecken sich die Seitenflächen benachbarter Ringenden in gemeinsamen Ebenen.

Der Führungsvorsprung ist vorzugsweise nutseitig mit einer Schrägfläche oder einer Abrundung im Bereich des Endabschnitts versehen. Die Schrägfläche oder Abrundung kann derart ausgebildet sein, dass der Endabschnitt keine verschleißfördernde, spitze Kantenberührung mit dem Nutgrund aufweist. Bei einem bevorzugten Ausführungsbeispiel weist der Führungsvorsprung einen etwa rechteckigen Querschnitt auf. Die Körperkanten können insgesamt abgerundet oder angeschrägt sein. Dadurch werden Verschleiß und Beschädigungen am Kontaktpartner reduziert bzw. vermieden.

Vorzugsweise sind die Übergangsbereiche, wie beispielsweise die seitlichen Übergänge, zwischen dem Ringelementgrundkörper und dem Führungsvorsprung mit Abrundungen oder Schrägflächen versehen. Die radial außenliegende Fläche des Führungsvorsprungs ist im Bereich des Endabschnitts bevorzugt mit einer Abrundung versehen. Bei dieser Lösung werden Verschleiß und Beschädigungen am Kontaktpartner weiter reduziert.

Als besonders vorteilhaft hat es sich erwiesen, wenn sich die Führungsschenkel im Wesentlichen parallel zueinander erstrecken. Der Abstand der Führungsschenkel entspricht hierbei im Wesentlichen der Breite des Führungsvorsprungs zuzüglich eines geringen Spiels. Dadurch wird eine axial formschlüssige Verbindung ähnlich einer Gleitpassung erreicht, die hohen Anforderungen an die Verbindung der Ringenden genügt.

Die Endabschnitte der Führungsschenkel sind vorzugsweise mit zumindest einer Schrägfläche oder einer Abrundung, insbesondere am Innenradius, d.h. radial innenseitig und/oder axial außen im Bereich von Außenflächen versehen, so dass in diesem Bereich ebenfalls Verschleißerscheinungen zumindest reduziert sind.

Im eingebauten Zustand des Ringelements ist vorzugsweise jeweils ein Spalt zwischen dem Ringelementgrundkörper und dem jeweils benachbart angeordneten Ringende ausgebildet. Weiterhin ist es vorteilhaft, wenn ein Überlappungsbereich der Ringenden ausgebildet ist. Aufgrund der Spalte sind die Ringenden relativ zueinander in tangentialer Richtung verschiebbar, so dass der Umfang des Ringelements definiert variieren kann, wobei der Überlappungsbereich eine geführte Verbindung mit minimiertem Verschleißpotenzial für die Ringnut ermöglicht.

Bei einer besonders bevorzugten Weiterbildung der Erfindung ist zumindest ein Ringende radial zurückgehalten. Bei dieser Lösung sind die Ringenden neben der formschlüssigen Führung bezüglich der Axialebene auch in Radialrichtung geführt.

Vorzugsweise sind die Führungsschenkel mittels eines radial außenliegenden Verbindungsschenkels verbunden. Dadurch weist das erste Ringende einen etwa U-förmigen Querschnitt zur Führung des Führungsvorsprungs des zweiten Ringendes auf. Die minimierten Kontaktbereiche ermöglichen eine weitere Reduzierung des Verschleißes benachbarter Bauteile.

Der Führungsvorsprung ist gemäß einer vorteilhaften Erfindungsausführung gegenüber der Ringbreite, vorzugsweise etwa stufenförmig mit Übergangsradien, verjüngt ausgebildet. Vorzugsweise erstreckt sich der Führungsvorsprung symmetrisch zu der mittigen Axialebene des Ringendes.

Eine erfindungsgemäße Turbomaschine, insbesondere eine Fluggasturbine, weist zumindest ein erfindungsgemäßes Ringelement auf.

Das erfindungsgemäße Ringelement kann bevorzugt zwischen einer Schaufelplattform und dem Rotor, insbesondere einem Verdichterrotor, angeordnet sein. Vorzugsweise ist zumindest ein Ringelement axial vor einer Schaufelreihe und mindestens ein Ringelement axial hinter einer Schaufelreihe der Verdichterbeschaufelung angeordnet.

Sonstige vorteilhafte Weiterbildungen der Erfindung sind Bestandteil der weiteren Unteransprüche.

Im Folgenden wird ein bevorzugtes Ausführungsbeispiel der Erfindung anhand schematischer Zeichnungen näher erläutert. Es zeigen:
Figur 1 eine Schnittdarstellung einer Fluggasturbine im Bereich des Hochdruckverdichters;
Figur 2 eine Einzeldarstellung eines Dichtungsrings aus Figur 1;
Figur 3 eine Detaildarstellung eines Dichtungsrings aus Figur 1 im Bereich der Ringenden;
Figur 4 eine Schnittdarstellung entlang der Linie F-F aus Figur 3;
Figur 5 eine vergrößerte Einzeldarstellung eines Ringendes aus Figur 3;
Figur 6 eine Schnittdarstellung entlang der Linie E-E aus Figur 3 und
Figur 7 eine Schnittdarstellung entlang der Linie C-C aus Figur 2.

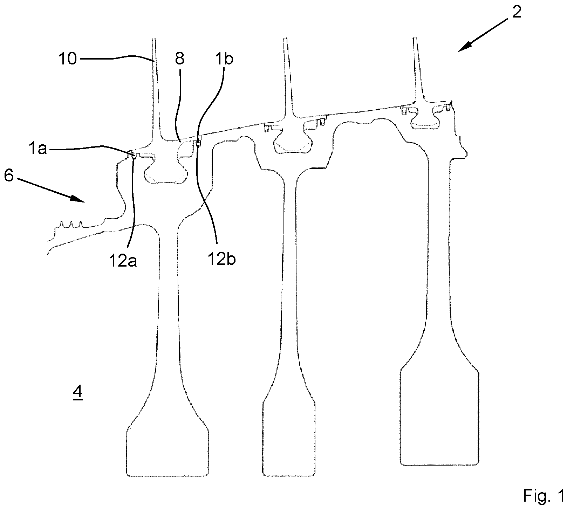

Figur 1 zeigt beispielhaft die Anwendung erfindungsgemäßer Ringelemente 1 als Dämpfungs- und Dichtringe im Bereich eines Hochdruckverdichters 2 einer Fluggasturbine 4. Die Erfindung ist jedoch nicht auf die Anwendung der Ringelemente 1 in diesem Bereich beschränkt, vielmehr können die Ringelemente 1 auch in anderen Bereichen vorteilhaft eingesetzt werden.

Die Ringelemente 1 sind bei dem dargestellten Ausführungsbeispiel zwischen einem Verdichterrotor 6 und Schaufelplattformen 8 von Verdichterschaufeln 10 zur Dämpfung und Einschränkung des Schaufelkippens angeordnet, wobei jeder Verdichterstufe ein Ringelement 1a axial vor einer Schaufelreihe der Verdichterschaufeln 10 und ein Ringelement 1b axial hinter der Schaufelreihe der Verdichterbeschaufelung 10 zugeordnet ist. Die Ringelemente 1 sind jeweils in einer etwa U-förmigen, radial nach außen offenen Ringelementnut 12a, 12b des Verdichterrotors 6 angeordnet. Dies ist exemplarisch anhand der in Figur 1 ersten Verdichterstufe von drei in axialer Bauart aufeinander folgenden Verdichterstufen des Hochdruckverdichters 2 erläutert.

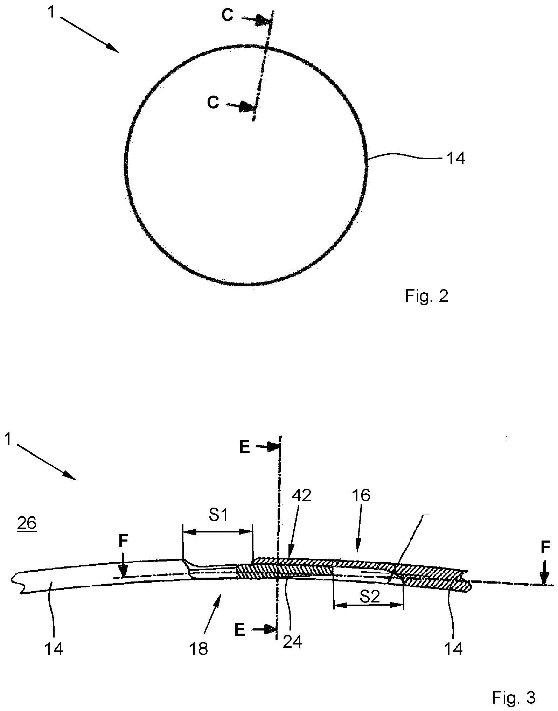

Wie insbesondere den Figuren 2 und 3 zu entnehmen ist, die eine Einzeldarstellung und eine vergrößerte Detaildarstellungen eines Ringelements 1 aus Figur 1 zeigen, weisen die Ringelemente 1 einen kreisförmigen Ringelementgrundkörper 14 mit zwei benachbart angeordneten Ringenden 16, 18 auf.

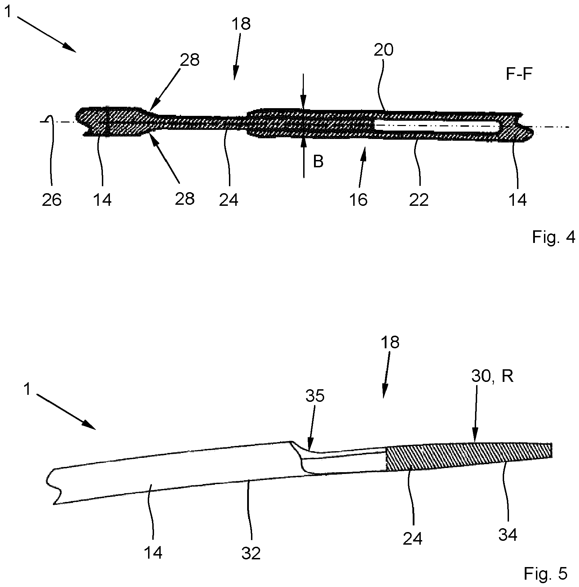

Gemäß Figur 4, die eine Schnittdarstellung des Ringelements 1 entlang der Linie F-F aus Figur 3 zeigt, weist das erste Ringende 16 des Ringelements 1 zwei Führungsschenkel 20, 22 zur mittigen, gleitenden Aufnahme eines Führungsvorsprungs 24 des zweiten Ringendes 18 auf. Die Führungsschenkel 20, 22 erstrecken sich parallel zueinander. Die Ringenden 16, 18 sind dadurch gemäß dem Prinzip einer Nut-Feder-Verbindung bezüglich einer Axialebene 26, die sich bei dem dargestellten Ausführungsbeispiel mittig durch das Ringelement 1 erstreckt, formschlüssig geführt. Der Verschleiß und Beschädigungen des Verdichterrotors 6 sowie angrenzender Bauteile im Bereich der Ringenden 16, 18 sind aufgrund der verringerten Beweglichkeit der Enden zumindest stark minimiert. Die Betriebssicherheit ist dadurch erheblich verbessert und eine höhere Bauteillebensdauer wird erreicht. Die seitlichen Übergangsbereiche 28 zwischen dem Ringelementgrundkörper 14 und dem Führungsvorsprung 24 sind mit konkaven Abrundungen 28 versehen, so dass der Seitenwandverschleiß weiter minimiert ist. Der Führungsvorsprung 24 erstreckt sich symmetrisch zu der mittigen Axialebene 26 des Ringendes 18, wobei der Führungsvorsprung 24 gegenüber der Ringbreite B etwa stufenförmig mit den Übergangsradien 28 verjüngt ausgebildet ist.

Wie insbesondere Figur 5 zu entnehmen ist, die eine vergrößerte Einzeldarstellung des Ringendes 18 aus Figur 3 im Bereich des Führungsvorsprungs 24 zeigt, ist die radial außenliegende Fläche 30 des Führungsvorsprungs 24 im Bereich des Endabschnitts mit einem relativ großen Radius R versehen. Der Führungsvorsprung 24 ist im Bereich des Innenumfangs, d.h. auf einer Nutseite 32, an seinem Endabschnitt mit einer Schrägfläche 34 versehen und daher zum Ende hin verjüngt ausgebildet. Die Schrägfläche 34 ist derart ausgebildet, dass der Endabschnitt keine verschleißfördernde, spitze Kantenberührung mit dem Nutgrund der Ringnut aufweist. Dadurch werden Beschädigungen am Kontaktpartner vermieden. Im Bereich der Außenumfangsseite ist der Ringelementgrundkörper 14 zum Führungsvorsprung 24 hin stufenförmig über einen konkaven Übergangsabschnitt 35 verjüngt.

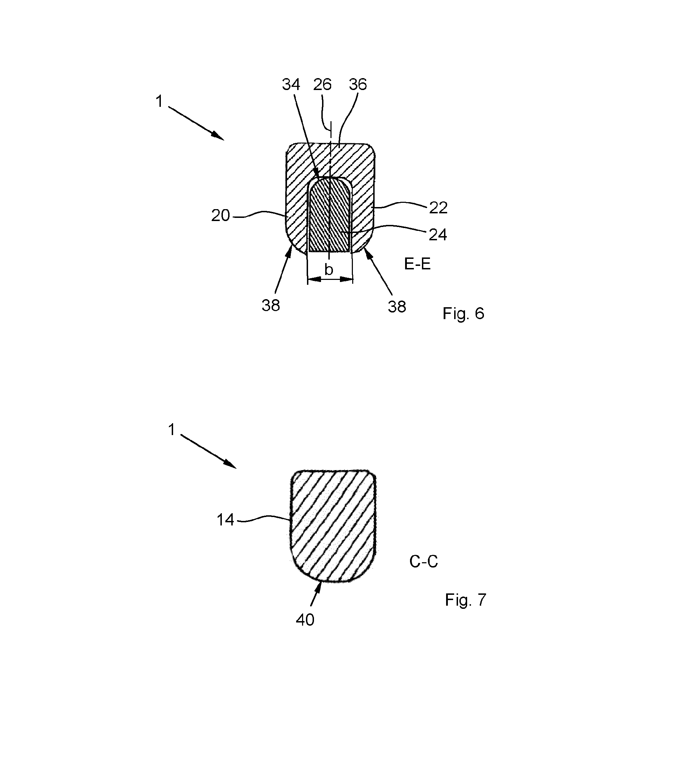

Gemäß Figur 6, die eine Schnittdarstellung des Ringelements 1 entlang der Linie E-E aus Figur 3 zeigt, weist der Führungsvorsprung 24 des zweiten Ringendes einen etwa rechteckigen Querschnitt mit einer radial außenliegenden Abrundung 34 auf, welche die Seitenflächen des Führungsvorsprungs 24 verbindet. Die Führungsschenkel 20, 22 des ersten Ringendes erstrecken sich parallel zueinander. Bei dieser Lösung sind die Ringenden neben der formschlüssigen Führung bezüglich der Axialebene 26 auch in Radialrichtung derart geführt, dass ein Ringende radial zurückgehalten ist. Hierzu sind die Führungsschenkel 20, 22 mittels eines radial außenliegenden Verbindungsschenkels 36 verbunden. Dadurch weist das erste Ringende einen etwa U-förmigen Querschnitt zur Führung des Führungsvorsprungs 24 des zweiten Ringendes auf. Der Abstand der beiden Führungsschenkel 20, 24 zueinander entspricht im Wesentlichen der Breite b des Führungsvorsprungs 24 zuzüglich eines geringen Spiels, so dass sich die beiden Ringenden endseitig zu einem gemeinsamen Führungskörper ergänzen (vgl. Figur 3). Die Endabschnitte der Führungsschenkel 20, 22 sind radial innenseitig mit einer Abrundung 38 versehen, so dass in diesem Bereich ebenfalls Verschleißerscheinungen zumindest reduziert sind.

Wie Figur 7 zu entnehmen ist, die eine Schnittdarstellung des Ringelements 1 entlang der Linie C-C aus Figur 2 zeigt, hat der Ringelementgrundkörper 14 einen etwa rechteckigen Querschnitt, der radial innenseitig mit einer Abrundung 40 versehen ist, die sich gemäß Figur 6 über die Führungsschenkel 20, 22 als Abrundungen 38 fortsetzt.

Im eingebauten Zustand des Ringelements 1 ist gemäß Figur 3 jeweils ein Spalt S1, S2 zwischen dem Ringelementgrundkörper 14 und dem jeweils benachbart angeordneten Ringende 16 bzw. 18 ausgebildet. Weiterhin ist es vorteilhaft, dass ein Überlappungsbereich 42 der Ringenden 16, 18 ausgebildet ist. Aufgrund der Spalte S1, S2 sind die Ringenden 16, 18 relativ zueinander in tangentialer Richtung verschiebbar angeordnet, so dass der Umfang des Ringelements 1 definiert variieren kann, wobei der Überlappungsbereich 42 eine geführte Verbindung mit minimiertem Verschleißpotenzial für die Ringnut 12 und die Schaufelplattformen 8 ermöglicht (vgl. Figur 1).

Offenbart ist ein Ringelement 1 für eine Turbomaschine, insbesondere für eine Fluggasturbine 4, mit einem Ringelementgrundkörper 14, der zwei benachbart angeordnete Ringenden 16, 18 aufweist, wobei die Ringenden 16, 18 formschlüssig bezüglich einer Axialebene 26 miteinander verbunden sind. Weiterhin offenbart ist eine Turbomaschine mit zumindest einem derartigen Ringelement 1.

### Bezugszeichenliste

- 1: Ringelement
- 2: Hochdruckverdichter
- 4: Fluggasturbine
- 6: Verdichterrotor
- 8: Schaufelplattform
- 10: Verdichterschaufel
- 12: Ringelementnut
- 14: Ringelementgrundkörper
- 16: Ringende
- 18: Ringende
- 20: Führungsschenkel
- 22: Führungsschenkel
- 24: Führungsvorsprung
- 26: Axialebene
- 28: Übergangsbereich
- 30: Fläche
- 32: Nutseite
- 34: Abrundung
- 35: Übergangsabschnitt
- 36: Verbindungsschenkel
- 38: Abrundung
- 40: Abrundung
- 42: Überlappungsbereich

## Patentansprüche

1. Ringelement (1) für eine Turbomaschine, insbesondere für eine Fluggasturbine (4), mit einem Ringelementgrundkörper (14), der zwei benachbart angeordnete Ringenden (16, 18) aufweist, **dadurch gekennzeichnet, dass** die Ringenden (16, 18) formschlüssig bezüglich einer Axialebene (26) miteinander verbunden sind.

2. Ringelement nach Anspruch 1, wobei ein erstes Ringende (16) zwei Führungsschenkel (20, 22) zur Aufnahme eines Führungsvorsprungs (24) eines zweiten Ringendes (18) aufweist.

3. Ringelement nach Anspruch 2, wobei der Führungsvorsprung (24) zumindest im Bereich eines Endabschnitts auf einer dem Nutgrund einer zur Aufnahme des Ringelementes (1) vorgesehenen Ringelementnut (12) zugewandten Seite eine Schrägfläche (34) und/oder eine Abrundung aufweist.

4. Ringelement nach Anspruch 2 oder 3, wobei zumindest ein Übergangsbereich (28, 35) zwischen dem Ringelementgrundkörper (14) und dem Führungsvorsprung (24) mit einer Abrundung und/oder einer Schrägfläche versehen ist.

5. Ringelement nach einem der Ansprüche 2 bis 4, wobei sich die Führungsschenkel (20, 22) im Wesentlichen parallel zueinander erstrecken.

6. Ringelement nach einem der Ansprüche 2 bis 5, wobei die Endabschnitte der Führungsschenkel (20, 22) zumindest eine Schrägfläche und/oder eine Abrundung (38), vorzugsweise am Innenradius und/oder axial außenseitig, aufweisen.

7. Ringelement nach einem der vorhergehenden Ansprüche, wobei im eingebauten Zustand ein Spalt (S1, S2) zwischen dem Ringelementgrundkörper (14) und dem jeweils benachbart angeordneten Ringende (16, 18) und ein Überlappungsbereich (42) der Ringenden (16, 18) ausgebildet sind.

8. Ringelement nach einem der vorhergehenden Ansprüche, wobei zumindest ein Ringende (16, 18) radial zurückgehalten ist.

9. Ringelement nach einem der Ansprüche 2 bis 8, wobei die Führungsschenkel (20, 22) mittels eines radial außenliegenden Verbindungsschenkels (36) verbunden sind.

10. Ringelement nach einem der Ansprüche 2 bis 9, wobei der Führungsvorsprung (24) gegenüber der Breite des Ringelementgrundkörper (14), vorzugsweise etwa stufenförmig mit Übergangsradien (28), verjüngt ausgebildet ist und sich symmetrisch zu der mittigen Axialebene (26) des Ringendes (18) erstreckt.

11. Turbomaschine, insbesondere Fluggasturbine (4), mit mindestens einem Ringelement (1) gemäß zumindest einem der vorhergehenden Ansprüche.

12. Turbomaschine nach Anspruch 11, wobei zumindest ein Ringelement (1) zwischen einer Schaufelplattform (8) und einem Rotor, vorzugsweise einem Verdichterrotor (6) einer Fluggasturbine (4), angeordnet ist.
